(19) **Europäisches Patentamt / European Patent Office / Office européen des brevets**

(11) **EP 3 112 212 B1**

(12) # EUROPEAN PATENT SPECIFICATION

(45) Date of publication and mention of the grant of the patent:
**19.02.2020 Bulletin 2020/08**

(51) Int Cl.:
**B60P 3/14** *(2006.01)*   **B60P 7/08** *(2006.01)*

(21) Application number: **15174847.2**

(22) Date of filing: **01.07.2015**

(54) **ABSORBING RAIL**

ABSORBIERENDE SCHIENE

RAIL D'ABSORPTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**04.01.2017 Bulletin 2017/01**

(73) Proprietor: **Modul-System HH AB**
**431 22 Mölndal (SE)**

(72) Inventor: **Carlsson, Anders**
**422 50 HISINGS BACKA (SE)**

(74) Representative: **AWA Sweden AB**
**P.O. Box 11394**
**404 28 Göteborg (SE)**

(56) References cited:
**EP-A1- 1 894 773       EP-A2- 1 816 031**
**DE-U1-202011 051 399   US-A- 4 992 015**
**US-A1- 2010 260 541     US-A1- 2013 309 037**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

Printed by Jouve, 75001 PARIS (FR)

## Description

Field of the Invention

The present invention relates to a fastening system adapted for use within a cargo or a back space of a service vehicle and to a method for securely attaching items in such a fastening system.

Technical Background

It is general practice in the art of service vehicles to equip a back space or a cargo space of an automotive vehicle with modular systems which can be made up of modular units, such as e.g. cupboards, tool holders, shelves or other modular units. This is generally done in a separate step after the vehicle has been manufactured, i.e. the equipping of the vehicle in question is made separately from the manufacturing. Before the vehicle is equipped with specialized equipment, usually the cargo space of the vehicle is provided with an inner floor, usually made of wood, but the floor might also be made of for example an artificial, plastic material. This floor functions as a good support to work, stand and walk upon and is also used as an anchor plate for the module unit. Often the vehicle walls are also covered by an inner wall, usually made of wood, which is fastened to the vehicle walls using screws or rivets. Equipping the inside of other vehicles, such as aircrafts, with rails that enable attachement of onboard equipment is also known, and a coupling device for such rails is disclosed in US 2010/0260541.

The modular system is often also at least partially fitted to the wall and the aim is to prevent the units from tilting, for example in a turn. It is customary to fix the modular unit(s) in the wall with fastening brackets (angle irons) and securing elements, such as, e.g. screws or the like attached to rails or penetrating the vehicle wall. Also, there is a risk of a module system or module unit(s), or modular unit(s), breaking away during acceleration or deceleration/retardation of the vehicle, which may cause damages inside the vehicle. Considering that the modular units often may be equipped with rather heavy equipment such as tools and materials included in a toolkit, they many times pose a safety risk. During severe deceleration or collision of the vehicle, the modular unit(s) can in a "worst case scenario", if not securely fastened to the vehicle, break through to the driver's cabin and thereby even cause personal injury.

As already stated, common angle brackets are often used, together with for example, screw, bolts or other suitable securing elements, to fasten the modules to the wall or to a rail attached to a wall in the service vehicle. However, these angle brackets and securing elements are subjected to extremely large forces in the event of a severe deceleration. The weakest link is often the interface to the vehicle, to the rail, to the modular unit or to the securing element, where, for example, a screw or bolt is broken off before the energy in the severe deceleration is absorbed which can result in the module breaking loose and causing damage. In order to reduce the risk a more secure system for fixing modular systems/units in the vehicles is desirable.

Summary of the Invention

It is accordingly an object of the present invention to provide a fastening system adapted for use within a cargo or a back space of a service vehicle and a method for securely attaching items in such a fastening system which alleviates all or at least some of the above-discussed drawbacks of the presently known systems and methods.

This object is achieved by means of a fastening system and a method as defined in the appended claims.

According to a first aspect of the present invention, there is provided a method for fastening an item in a fastening system adapted for a cargo or a back space of a vehicle, such as a service vehicle, the system comprising at least one elongated fastening rail attached to an inner surface of said cargo or back space, said method comprising fastening said item to said rail by pressing said item against at least one portion of said fastening rail with at least one securing element so that the item moves along and in contact with said fastening rail when subjected to a loading force of a magnitude above a predefined loading threshold value and so that said item does not move when subjected to a loading force of a magnitude below or equal to the predefined loading threshold value, wherein said at least one portion comprises a surface structure so as to control a frictional coefficient between said at least one portion of said fastening rail and said item.

The fastening rail together with the item and the securing element allows a user to easily fasten module systems with modular units such as e.g. shelves, cupboards, storage boxes, tool holding equipment, etc. The item that is to be fastened may be any item a user would like to attach to a wall in the cargo or back space of a vehicle, such as e.g. a fastening bracket (or simply bracket), a holder, lashing eyelet, hanging hook etc. The fastening rail may be any type of applicable rail adapted to be attached to an inner surface of a cargo or backspace of a service vehicle. Such a fastening rail is e.g. available from the applicant of the present application, Modul System AB, of Gothenburg, Sweden and is also disclosed in European patent application No. 14198183.7 by the same applicant. The fastening rail may be attached to an inner surface of the cargo or back space of the service vehicle by using an adhesive or mechanically by e.g. screws, bolts, nails, etc. Further, the inner surface of the cargo or back space on which the fastening rail is attached may be the floor, a wall or ceiling.

In one exemplary embodiment the fastening rail comprises at least one undercut groove. The undercut groove may be adapted to fasten an item to it during use. In at least some exemplary embodiments, the groove extends along the entire or substantially the entire length of the fastening rail. This allows for equipment or interior to be attached to the fastening rail and enables step-less manoeuvrability of the equipment or the interior giving an almost unlimited amount of different interior design possibilities. The undercut groove may have a cross-section which is T-shaped. The module system or module units may be securely connected to said undercut groove. This way the module system or the module units can be safely arranged to the wall of the back space without making any damage, for example holes, in the wall of the back space. Alternatively, other items may also be attached to the undercut groove. However, the fastening rail is not limited to have an undercut groove. The module system or the module units may be connected to the fastening rail in any other suitable way, for example screwing into the fastening rail.

According to one exemplary embodiment the at least one securing element comprises a nut and a bolt, said bolt comprising a threaded portion and a head, wherein the bolt is to engage the item by pressing the item between at least one portion of said fastening rail and the head of the bolt, wherein the threaded portion engages the nut, said nut being positioned in the undercut groove. The nut may be a T-shaped nut to fit in a T-shaped undercut groove of the fastening rail.

The securing element is in one exemplary embodiment a separate element, i.e. it is not a part of the fastening rail nor the item. By having the securing element as a separate element it can be adapted after what material the item is made of and what thickness the item has. Further a mix of different securing elements may be used for fastening the item to the fastening rails. The securing element may for example be a screw, comprising a screw head and an at least partly threaded portion, wherein the screw head is adapted to press against the item during use and to be screwed into the fastening rail. Thus, a cheap and robust method of attaching the item to the fastening rail is provided. The screw head may be adapted to press against the item directly or via a force spreading member such as e.g. a washer. Alternatively the securing element may be a bolt, a stud or the like. In contrast, the securing element may be a part or portion of said fastening rail and/or item, e.g. an elastic structure allowing for fixation of the item by some "click-on" or "push-on" action. Also, a securing element may be used to fasten the modular unit (e.g. cupboard, toolbox, storage box, etc.) to the item.

The loading force is the force that is exerted on the item(s) and consequently also on the securing element(s) when the vehicle is accelerating or decelerating. Accordingly, the item(s) and securing element(s) will be subjected to forces of larger magnitudes if heavy modular units are being attached/fastened to the items, making them a larger safety concern. In one exemplary embodiment the loading threshold value is below the ultimate strength of the securing element (either the securing element(s) attached to the rail or the securing element(s) attached to the modular unit). The loading threshold value may also be set to be below the ultimate strength of the item if deemed more appropriate, e.g. if the item is prone to break before the securing element(s) when subjected to forces of large magnitude. The ultimate strength of the securing element or the item is to be understood as the magnitude of force (Newton), i.e. the loading force, that can be tolerated by the securing element or the item before they break off, also known as breaking force. For example, the ultimate strength of a plastic screw with a small diameter may be lower than for a steel screw or bolt with a larger diameter. The ultimate strength of a securing element, such as e.g. a bolt or a screw is often provided by the manufacturer and readily available for a user installing a system in accordance with the inventive concept. However, a person skilled in the art may also calculate the ultimate strength or breaking force of a securing element given the material and dimensions of the securing element. For example the ultimate strength for a bolt may be calculated if the bolt diameter, thread pitch and bolt grade is known. Moreover, in some embodiments different securing elements are used (the securing element(s) attached to the rail or the securing elements(s) attached to the modular unit), which may result in different ultimate strengths. Accordingly, the predefined loading threshold value may be below the ultimate strength of a securing element that is pressing the item against at least one portion of a modular unit. Suitably, this may be determined based upon which of the securing elements is prone to break first when subjected to force of large magnitudes.

The present invention is based upon the realization that by allowing some of the energy, from for example a moving heavy modular unit, to be absorbed by the fastening rail instead of the securing element(s) or the item(s), e.g. during a collison, the risk of one or several modular units breaking loose and causing damage can be significantly reduced. By controlling the amount of force required to move the attached securing element and item along the fastening rail, i.e. the frictional force, a large amount of the energy resulting from e.g. a collision can be absorbed by the fastening rail and/or dissipated as heat from friction between the securing element and the fastening rail and/or the item and the fastening rail. In other words, the item and associated modular unit is arranged to move in a controlled manner along and in contact with the rail in order to avoid forces of very large magnitudes to act on the securing elements. The invention aims to control the frictional force that is to be overcome for the item (and possibly the securing element) to move along said rail in a safe manner. It does not matter if the frictional coefficient has to be increased or decreased, in some applications the problem might be with high frictional coefficients resulting in broken securing elements during severe decelerations. However, in other applications the frictional coefficient is too low and the items and associated modular units move along the rail in an uncontrolled manner, also posing a safety risk.

The frictional force may be controlled by pressing the item or securing element against the rail with a pressing force of a specific magnitude so that the item and associated modular unit stays rigid and secure while still drastically improving driver/passenger safety during a severe decelartion, e.g. in case of a collision. Another way to control the amount of force required to move the securing element and item (frictional force) may be to provide a surface structure and hence control the frictional coefficient between the surfaces which are in contact. Since the item is allowed to move/slide along the rail, the rail is used to absorb the energy instead of letting the energy be absorbed by the item(s) or the securing element(s) until it breaks which can potentially have devestating consequences. Regarding the frictional coefficient; one can control the frictional coefficient between the rail and the item and/or the rail and the securing element. The frictional coefficient may be controlled/configured/arranged in various ways as will be described in the forthcoming. Additionally, a surface structure may be provided which is deformed as the item moves along and in contact with the rail so to absorb more of the energy. Alternatively or in addition the item may be arranged to transform at least some of the loading force to a rotational force around a long axis of the securing element, and provide at least one portion such as a flange, which is brought in contact with at least one portion of the rail when subjected to the loading force above a predefined threshold value.

In one exemplary embodiment the at least one portion of said fastening rail has a surface structure so as to control a frictional coefficient between said at least one portion of said fastening rail and said item. This allows for quick and easy standardized installation of the full modular system and in particular the fastening of the various items and corresponding modular units with conventional securing elements. By providing the at least one portion of the fastening rail with a surface structure, by e.g. mechanical surface roughening, chemical treatment, ribbing, denting, etc. one can efficiently control the frictional force that is to be overcome before the item is moved along and in contact with the fastening rail. For example, the surface on the at least one portion of the fastening rail can be provided with indentations and/or protrusions. In addition, a surface of the item that is in contact with the fastening rail may be provided with similar or corresponding protrusions and/or indentations. They may for example be provided so that the two surfaces are in contact with each other in a semi-interlocking fashion. Which will result in a rigidly fastened item even if the pressing force were to be reduced, however the two surfaces would not be interlocked in such a fashion to hinder movement of the item/securing element along the rail when subjected to forces above the predefined threshold value. In other embodiments, the surface of the fastening rail may be substantially smooth while the surface of the item in contact with the fasting rail may be provided with a surface structure of the above described or other types.

Moreover, the surface structure may additionally provide energy absorbing means, for example in the form of a surface structure. Preferably the surface structure would be deformable. This would mean that the rail has a structure which is deformed as the item and securing element move along the rail, thus absorbing energy. In some embodiments, only the item will move along the fastening rail. In the example with the at least one portion of the fastening rail having protrusions, these protrusions may be deformed (flattened) as the item moves along the rail, thus absorbing some of the energy.

Further, in one exemplary embodiment the at least one portion of said fastening rail has a surface structure so as to control a frictional coefficient between said at least one portion of said fastening rail and said securing element. This is advantageous in cases where it is easier to modify the surface structure of a portion of the rail in contact with the securing element instead of the item or if the surface contact area of the fastening rail and the securing element is much larger or better suited than the surface contact area between the fastening rail and the item. Similarly to the previously discussed embodiment, the surface structure may be ribbed, dented, roughened, etc. The securing element may also be provided with a similar or a corresponding surface structure as the surface structure of the at least one portion of the fastening rail, e.g. if the rail is provided with protrusions the securing element may be provided with identations or vice versa.

Moreover, according to one exemplary embodiment, the frictional coefficient is based on the predefined loading threshold value and a pressing force that said securing element is pressing said item against at least one portion of said fastening rail with. In another exemplary embodiment the frictional coefficient is based on the predefined loading threshold value and a pressing force that a securing element is pressing the item against at least one portion of a modular unit with. The appropriate frictional coefficient may be readily derived given a desired loading threshold value and the pressing force which the securing element is pressing the item with. The pressing force may also in some contexts be known as a biasing force and may for example be derived from the torque which a screw or bolt is fastened/screwed with. In some cases an interval of pressing forces may be given due to individual material properties, however an interval of pressing forces/biasing forces will merely result in an interval for the frictional coefficient which is also satisfactory.

In one exemplary embodiment the desired frictional coefficient $\mu$ is derived from the formula:

$$\mu = \frac{F_{load}}{F_{press}}$$

Where $F_{load}$ is the predefined loading threshold value of the loading force and $F_{press}$ is the magnitude of the pressing force/biasing force. If the securing element would for example be a nut and bolt, or any other securing element where there are two separate interfaces of surfaces pressing against each other, the denominator (on the right side in the equation/formula above) would be multiplied by two as there are two friciton-causing interfaces present, e.g. between the rail and the nut and the item and the rail, assuming that similar materials and surfaces structures are used. However, even if there would be two friction-causing interfaces, if one of the surfaces were to be configured to have a high frictional coefficient, e.g. by ribbing, the contribution from the other surface would be insignificantly small and hence not considered. The equation may then be formulated as:

$$\mu_1 + \mu_2 = \frac{F_{load}}{F_{press}}$$

Where for example $\mu_1$ may be the frictional coefficent of roughened or ribbed surfaces and $\mu_2$, may be the frictional coefficent of the relatively smooth surfaces and may thus be ignored so to simplify the calculations while still providing accurate enough results. However, both contributions may be considered if prefered so to achieve more accurate results, e.g. if error-margins are small.

In one exemplary embodiment, an M8 bolt is used to fasten a fastening bracket to a rail and two M6 bolts are used to fasten a modular unit to the fastening rail. The ultimate strength of the M6 bolts is between 12 kN and 14 kN, and that is less than the ultimate strength of the M8 bolt. Thus, by using a torque wrench or torque screwdriver to tighten the M8 bolts at 32 nm, the resulting pressing force (biasing force) will be around 20-25 kN depending on the friction in threads and material. The loading threshold value is selected to be 10 kN which will result in a desired frictional coefficient of 0,2 - 0,25.

Further, in another exemplary embodiment, the pressing of the item against at least one portion of the fastening rail with a securing element comprises pressing the item against at least one portion of the fastening rail with a securing element with a pressing force of a predefined magnitude. This can for example be done by using a torque wrench or a torque screwdriver, if the securing element e.g comprises a nut and bolt or a screw. Thus, a simple way to install and attach modular units of a modular system is achieved. This may for example be useful when the frictional coefficient(s) between the surfaces which are in contact is(are) known. Accordingly, the required pressing force can be determined and enforced by selecting the appropriate torque wrench or torque screwdriver.

Further, in one exemplary embodiment the loading force is substantially parallel with a long axis of the fastening rail. The fastening rail is an elongated rail arranged on an inner surface of a vehicle, such as e.g. a service vehicle, and often with the ends of the rail extending from front to back of the vehicle.

Even further, in one exemplary embodiment, the item is an angled bracket comprising at least one flange, which at least one flange at least partially extends into an undercut groove of the fastening rail, and wherein the bracket is arranged so that when subjected to a loading force, it is at least partially, transformed into a rotational force around a long axis of the securing element which is pressing the angled bracket against the fastening rail. The loading force being substantially parallel with a long axis of the fastening rail and may be caused by movement of a modular unit which is attached to the angled bracket. This provides an additional and/or alternative way for the fastening rail to absorb some of the energy resulting from a severe deceleration/acceleration such as e.g. a collision. In case of such an event, large loading forces may be exerted on the item(s) and consequently the securing element(s) by the associated modular units, thus, when this loading force is transformed to a rotational force the flange will be pressed against at least one portion of the fastening rail and efficiently act as a brake for the item when it moves along and in contact with the fastening rail. In other words, the frictional force is efficiently increased in this exemplary embodiment with the help of a flange pressing against the fastening rail, since an increase in loading force will increase the rotational force and consequently the force with which the flange is pressing against at least one portion or surface of the rail.

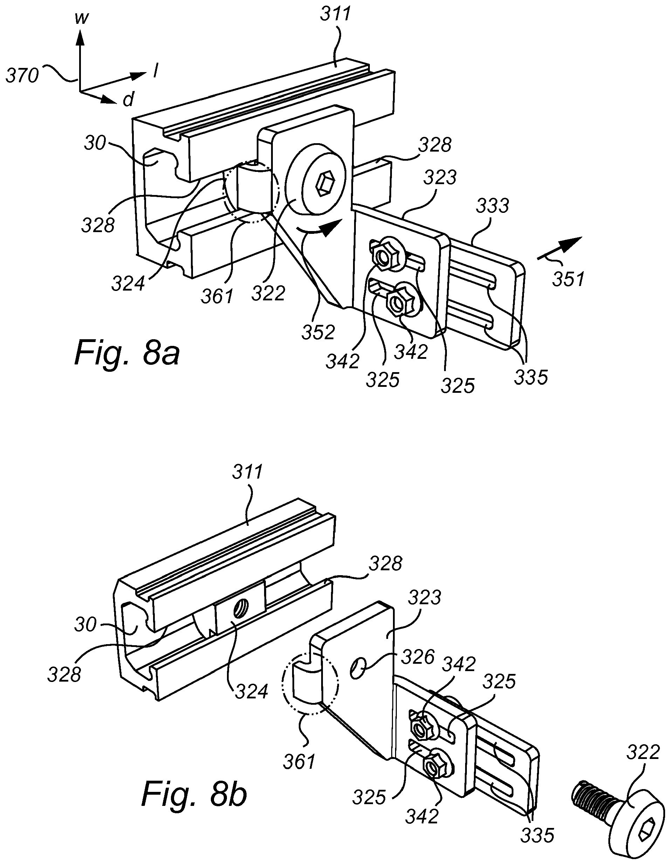

The fastening rail has a length along a long axis (length direction), a depth in a direction towards the surface on which the fastening rail is attached (depth direction) and a width in the remaining orthogonal direction (width direction) in a three dimensional space (see the coordinate system in Fig. 8a). The item being an angled bracket comprising a first set of means for fastening the bracket to the fastening rail and a second set of means for fastening the bracket to a modular unit, wherein the second set of means is located at a position which displaced relative to the first set in a direction along (parallel to) the width direction of the rail. The means for fastening the bracket to the fastening rail or a modular unit being for example openings through which securing elements, such as e.g. screws or bolts, may be inserted. For example, if the rail would be attached to a wall in the back space of a vehicle, such as a service vehicle, and if an angled fastening bracket would be fastened to the rail by a securing element such as a bolt or screw, then a modular unit would be fastened to the bracket at a point in space located above or below the long axis of the securing element used to attached the bracket to the rail.

According to another aspect of the present invention, there is provided a fastening system adapted to be attached to an inner surface of a cargo or a back space of a vehicle, said fastening system comprising:

at least one elongated fastening rail for fastening an item, the fastening rail being adapted to be attached to said inner surface;

at least one securing element arranged to press said item against at least one portion of said fastening rail, wherein said item, while being pressed, is arranged to move along and in contact with said fastening rail when subjected to a loading force of a magnitude above a predefined loading threshold value and wherein said item is further arranged to not move when subjected to a loading force of a magnitude below or equal to the predefined loading threshold value, wherein said at least one portion comprises a surface structure so as to control a frictional coefficient between said at least one portion of said fastening rail and said item.

With this aspect of the invention, similar advantages, exemplary embodiments and preferred features are present as in the previously discussed first aspect of the invention.

These and other features and advantages of the present invention will in the following be further clarified with reference to the embodiments described hereinafter.

Generally, all terms used in the claims are to be interpreted according to their ordinary meanings in the technical field, unless explicitly defined otherwise herein. All references to "a/an/the [element, device, component, means step, etc]" are to be interpreted openly as referring to at least one instance of said element, device, component, means, step etc., unless explicitly stated otherwise.

Brief Description of the Drawings

For exemplifying purposes, the invention will be described in closer detail in the following with reference to exemplary embodiments thereof illustrated in the attached drawings, wherein:

Fig. 1 shows an open-up perspective view of a service vehicle comprising a fastening system showing different types of items, fastened to the fastening rails in accordance with an embodiment of the present invention.
Fig. 2 shows an enlarged exploded view of the cut out 15 in Fig. 1 with a fastening bracket in accordance with an embodiment of the present invention.
Fig. 3 shows a cross-sectional view of the fastening rail surface and the corresponding bracket surface from Fig. 2. in accordance with an embodiment of the present invention.
Fig. 4 shows an enlarged exploded view of the cut out 16 in Fig. 1 with a fastening bracket in accordance with another embodiment of the present invention.
Fig. 5 shows a cross-sectional view of the fastening rail surface and the corresponding bracket surface from Fig. 4 in accordance with an embodiment of the invention.
Fig. 6 shows an exploded view of a portion of a rail with a fastening bracket in accordance with another embodiment of the present invention.
Fig. 7a shows an enlarged exploded view of the cut out 15 in Fig. 1 with a fastening bracket in accordance with yet another embodiment of the present invention.
Fig. 7b shows the embodiment as illustrated in Fig. 7a from a different perspective.
Fig. 8a shows a perspective view of an item fastened to a rail with a securing element in accordance with yet another embodiment of the present invention.
Fig. 8b shows the embodiment as illustrated in Fig. 8a in an exploded view.
Fig. 9a-e show cross-sectional views of rail, item or securing element surfaces in accordance with different embodiments of the present invention.
Fig. 10 shows a graph which illustrates the theoretical relationships between the loading force on the securing element or item and relative displacement and comparing a conventional system with a system in accordance with an embodiment of the present invention.

All the figures are highly schematic, not necessarily to scale, and they only show parts which are necessary in order to elucidate the invention, other parts being omitted or merely suggested.

Detailed Description of Exemplary Embodiments

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention.

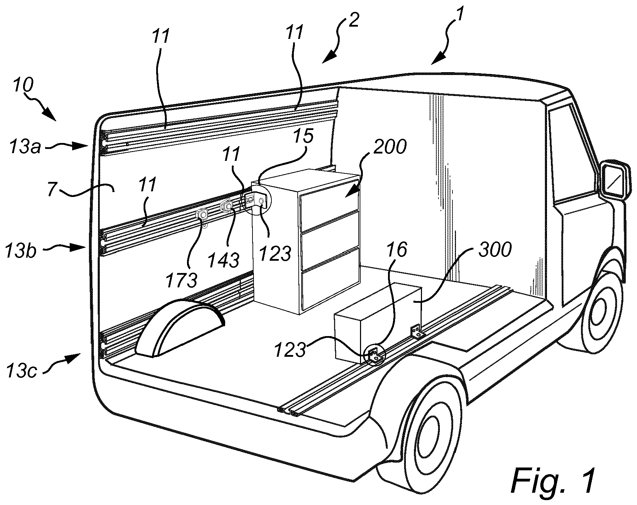

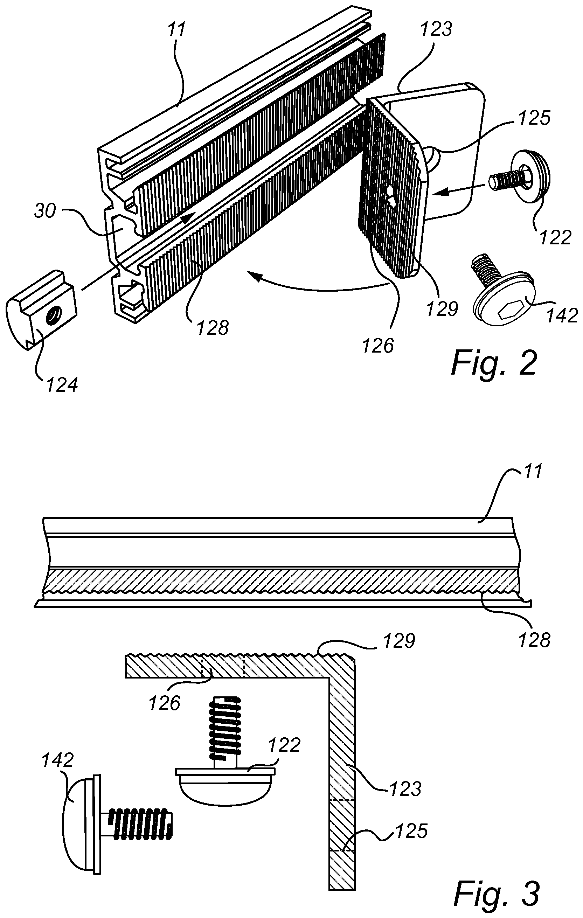

Fig. 1 shows a back space 2 of a service vehicle 1 comprising a fastening system 10. However, the backspace could be a cargo space. The fastening system 10 comprises several fastening rails 11, several items 123, 143, 173 and several securing elements (not shown in Fig. 1), see Fig 2-5. The fastening rails are attached to the inside surface of a vehicle wall, i.e. to the inner wall 7 of the back space 2 of the service vehicle 1. The fastening rails 11 are oriented in the main forward direction of the servie vehicle i.e. in the longitudinal direction of the vehicle, it is also in this direction that the fastened items 123, 143, 173 together with the associated modular unit (e.g. cupboard 200 or toolbox 300) should move in during severe decelerations. However, depending on the shape and setup of the back space 2 there may be occasions where the fastening rails 11 may be mounted transveresly or partly transversely in relation to the forward direction of the service vehicle. The fastening rails 11 may be arranged in different sets of fastening rails 11, as exemplified in Fig. 1 they can be arranged in a first set 13a, a second set 13b and a third set 13c. Particular details of the functionality and properties of the fastening rails 11 will be further discussed in reference to forthcoming figures.

Further in Fig. 1 different items 123, 143, 173 are fastened to the fastening rails 11. The following items are shown: a fastening bracket 123 for fastening a cupboard 200 or a toolbox 300. Only one bracket is shown in association with the cupboard 200, however more brackets may be used in order to better secure the cupboard 200; a lashing eyelet 143 fastened to the second set 13b and a hook 173 for hanging items also fastened to the middle fastening rail 13b. Other items, such as cable holders, or cargo nets may similarly be fastened to the fastening rails 11.

The items may be fastened by different types of securing elements, such as e.g. screws, nuts and bolts, clamps, etc. The items may also be secured on different parts or portions of the fastening rail 11.

Fig. 2 shows an enlarged exploded view of the cut-out 15 in Fig. 1 of the fastening rail 11 with a fastening bracket 123 for e.g. fastening a cupboard 200 or a shelf (not shown) in accordance with one exemplary embodiment of the invention. The fastening bracket 123 comprises means, here in the shape of an opening 125 for fastening the bracket to e.g. a cupboard 200 with for example a screw 142, alternatively a plurality of openings may be provided depending on the intended application and requirements. The securing elements 142 and 122 may be the same or different types, e.g. the securing element used to fasten the item 123 to the rail 11 may be an M8 bolt while the securing element 142 used to fasten the modular unit to the item 123 may be an M6 bolt or M6 screw. The fastening bracket 123 has an L-shaped form. The bracket 123 is fastened to the rail 11 by a securing element in the form of a threaded bolt 122. The bolt 122 engages the fastening bracket 123 by pressing the fastening bracket 123 between the head of the bolt 122 and the fastening rail 11. The opposite part of the bolt 122 goes through an opening 126 and engages a securing element 124, which works as a nut and which is inserted in the undercut groove 30 of the fastening rail 11. The arrows in the figure indicate how the components are to be assembled.

Further, a portion 128 of the fastening rail 11 is arranged with a rifled or ribbed surface 128 and the bracket is arranged with corresponding rifled or ribbed surface 129, so to alter the amount of force needed to move the bracket 123 along the fastening rail given the amount of pressing force exerted by the securing element(s) 122, 124 on the bracket 123, i.e. the frictional coefficient is controlled. The frictional coefficient may accordingly be controlled by for example increasing/decreasing the depth of the grooves, or how many grooves there are per length unit, etc. Moreover, as can be seen in the figure, the T-shaped nut 124 will contribute to the frictional force of the fastening system since it has a surface which is pressed against a surface of the rail, however this contribution to the total frictional force may be ignored since the frictional coefficient between these two surfaces (the nut 124 and the rail 11) will be small in comparison to the frictional coefficient between surfaces 128 and 129. Further, the ribbed surfaces 128, 129 may be deformable. The surfaces 128, 129 may then accordingly be deformed as the item 123 and securing element 122, 124 moves along and in contact with the fastening rail 11, hence absorbing some of the energy, e.g. during severe decelerations.

For example, the bolt may be secured in the fastening system by using a torque screwdriver, as known in the art. Further, given the desired loading threshold value after which the bracket 123 should move along the rail, so to prevent the bolt 122, screw 142 or bracket 123 from breaking off and posing a safety hazard during a severe deceleration, or to prevent the bracket 123 and associated modular unit from moving uncontrollably, and given the frictional coefficient of the two altered surfaces 128, 129 an operator may choose the appropriate torque screwdriver so to acomplish the objective of allowing the bracket 123 (and whichever modular unit mounted to the bracket) to move along the rail in a controlled and safe manner.

The type of fastening rail 11 used in the exemplary embodiment as illustrated in Fig. 2 may not have a problem with securing element(s) or item(s) breaking off due to large forces, in some cases there is a problem with the item 123 and the attached modular unit being able to move uncontrollably along the fastening rail 11. The frictional force may be too low in these kinds of "sliding rails" and thus by for example providing ribbled surfaces 128, 129 the frictional force may be increased so that the item moves along the rail in a safe and controlled way.

By modifying or altering the surfaces 128, 129 and correspondingly increasing the frictional coefficient, the impact/significance of the frictional force between the securing element(s) 122, 124 and the portion(s) of the fastening rail 11 that are in contact with portions of the securing element(s) may be diminshed and thus the determining of the appropriate pressing force is made easier since the amount of factors in the equation(s) is reduced.

Fig. 3 illustrates a cross-sectional view of the altered (ribbed/rifled) surfaces 128, 129 from Fig. 2. In this schematic illustration it is easier to see the portion or surface of the fastening rail 11 that has been altered so to control the frictional coefficient and thus the loading threshold value above which the item 123 (bracket 123 in this case) is to move along and in contact with the fastening rail 11. Accordingly, a large amount of the force or strain that is exerted on the bolt 122, the screw 142 and the bracket 123 during e.g. a collision can be absorbed and dissipated as heat from friction between the two surfaces 128, 129, as the bracket 123 slides along the surface 128 of the fastening rail 11, resulting in a safer fastening system for e.g. service vehicles.

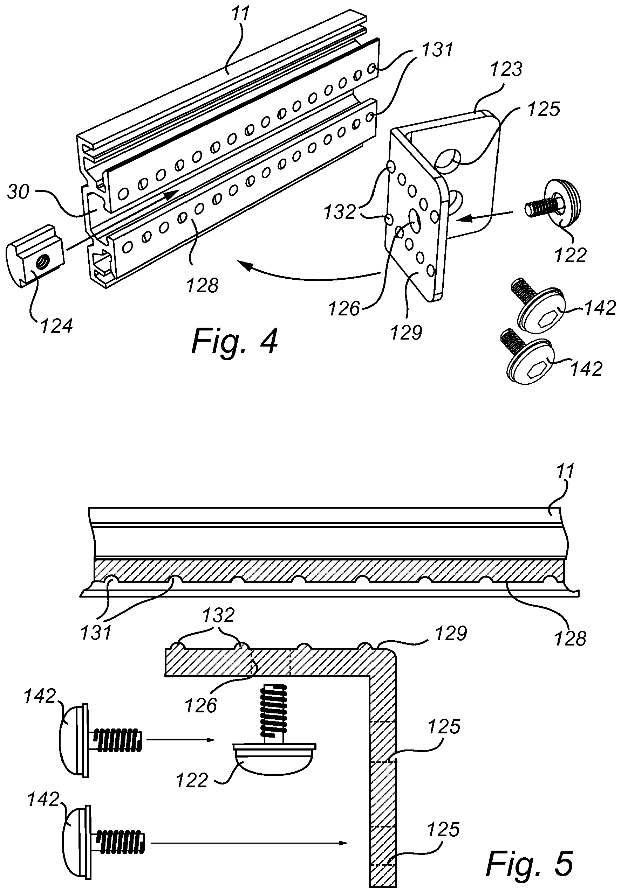

Fig. 4 shows an enlarged exploded view of the cut-out 16 in Fig. 1 of the fastening rail 11 with a fastening bracket 123 for e.g. fastening a toolbox, a cupboard 200 or a shelf in accordance with one exemplary embodiment of the invention. Similarly to the exemplary embodiment as illustrated in Fig. 2, the fastening bracket 123 comprises means (two openings 125) for fastening the bracket to e.g. a cupboard 200 with for example screws 142. The fastening bracket 123 is fastened to the rail 11 by a securing element, here in the form of a bolt 122. The bolt 122 is to engage the fastening bracket 123 by pressing the fastening bracket 123 against the two portions 128 on each side of the undercut groove 30 of the fastening rail 11. The part of the bolt 122 opposite to the head of the bolt engages another securing element, a T-shaped nut 124, which is inserted in the undercut groove 30 of the fastening rail 11. Also in this figure, the arrows indicate how the bracket 123 may be secured/fastened to the fastening rail 11 with the aid of the securing elements 122, 124. The surfaces 128, 129 according to this exemplary embodiment are provided with protrusions 132 and indentations 131, the identations 131 being on provided on the fastening rail 11, while the protrusions 132 are provided on the bracket 123, this is however interchangable and the protrusions 132 may be provided a surface of the fastening rail 11 while the identations 131 may be provided on the bracket 123 instead (not shown). Also, the protrusions/identations 132, 131 may be provided in numerous configurations and patterns which are not shown in the figures, e.g. every other is a protrusion/identation 132, 131, additional rows/lines, increasing/decreasing diameters, other shapes e.g. quadratic, triangular, decreasing/increasing the number total number of protrusions/identations 132, 131 per surface area, etc. One skilled in the art would readily see any of these alternative configurations as merely different embodiments of the present invention. Furthermore, Fig. 4 shows an alternative way to control the frictional coefficient between the engaging surfaces 128, 129 and thus the loading threshold value as compared to Fig. 2, given a pressing force which the bolt 122 presses the bracket 123 against the fastening rail 11 with. Additionally if the protrusions/identations 132, 131 are deformable an energy absorbing structure is provided. An interlocking mechanism is also provided so to increase the stability and rigidity of the fastened item when the protrusions/indentations are engaged.

The altered portions of the fastening rail 11 in Fig. 2 and Fig. 4 are covering the whole section of the rail in the figure, this is however merely an example and the altered section/portion may cover a larger or smaller surface area depending on desired application.

Fig. 5 illustrates a cross-sectional view of the two altered portions 128, 129 from Fig. 4. The fastening rail 11 in this exemplary embodiment is provided with identations 131 while the item 123 (bracket) is provided with corresponding protrusion 132. The identations 131 and protrusions 132 may be of varying shapes and configurations as discussed earlier. There are arrows indicating the placement of the two screws 142 when fastening the bracket 123 to e.g. a toolbox 300. Similar advantages and functions as discussed in reference to Fig. 3 are equally applicable for this exemplary embodiment illustrated in Fig. 5.

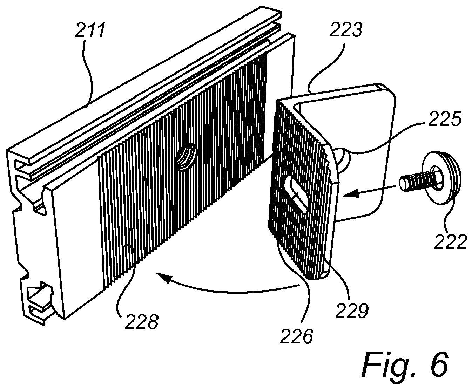

Fig. 6 illustrates another exemplary embodiment of the invention where a surface structure 228 is provided on a portion of a fastening rail 211 and a corresponding structure 229 is provided on an item, the item being illustrated as a fastening bracket 223. The fastening bracket 223 may be used for connecting a modular unit, such as, e.g. a cupboard 200, a toolbox 300, a shelf, a tool holder, a storage box etc. to a fastening rail 211. The fastening bracket 223 may be connected to the modular unit with a securing element such as a screw (not shown) via an opening 225. Similarly to the emboidment described with refrence to Fig. 2 and Fig. 3, the fastening rail 211 and the fastening bracket 223 are provided with a ribbed surface structure, which may be deformable. A securing element, here in the shape of a screw 222, engages the fastening bracket 223 by pressing the fastening bracket 223 between the head of the screw 222 and the fastening rail 211. The opposite part of the screw 222 (threaded part) goes through an opening 226 and engages an opening in the fastening rail 211.

In this embodiment the opening 226 on the fastening bracket 223 is an elongated opening so as to allow for the fastening bracket 223 to move along and in contact with the rail 211 when subjected to a loading force above a predefined loading threshold value in accordance with the inventive concept. By providing surface structures 228, 229, hence, controling the frictional coefficient between the fastening bracket 223 and the fastening rail 211, and given a pressing force (also called, biasing force or preloading force) with which the screw 222 is pressing the fastening bracket 223 against the rail 211, the frictional force may be controlled. For a given screw 222 an ultimate strength may be known, i.e. how much loading force the screw may withstand before breaking, often provided by the manufacturer of the screw 222. Thus, the loading threshold value may preferably be set below this ultimate strength of the securing element 222 so to prevent the securing element 222 from breaking off and potentially allowing the associated modular unit to cause damage in the service vehicle in case of a severe deceleration. Alternatively, the loading threshold value may be set below an ultimate strength of a second securing element (not shown), where the second securing element is used to fasten a modular unit to the bracket 223 via opening 225. Also in the exemplary embodiment illustrated in Fig. 6, similarly to the "sliding-type" rails, the frictional coefficient may be too low without a surface structure 228, 229. Thus, in case of a severe deceleration the modular unit attached to the bracket 223 might have built up enough momentum when sliding along the rail to cause the securing element 222, the second securing element (not shown) or item to break, hence, posing a potential safety hazard. The structured surface prevent such a scenario from happening by controlling the frictional coefficient, and effectively the frictional force which in turn will allow the rail to absorb some of the energy or force resulting from such an event like a collision.

In the exemplary embodiment illustrated in Fig. 6, the elongated opening 226 enables the fastening bracket 223 to move while the screw 222 remains relatively still in the fastening rail 211. Also, there will be some frictional force between the head of the screw 222 and the fastening bracket 223, however assuming that those two surfaces are relatively smooth in comparison to the structured surfaces 228, 229, i.e. presenting a smaller frictional coefficient, the contribution to the total frictional force from those two surfaces (head of the screw and the fastening bracket) may be disregarded. Alternatively the opening 225 may be elongated similarly to the elongated opening 226 in order to allow the modular unit to move along the bracket 223. Accordingly, a surface structure may be provided on the surface of the bracket 223 around the opening 226 and on the bottom surface of the head of the securing element placed in the possibly elongated opening 226. A similar adaptation of the other embodiments discussed with reference to the other figures is also possible.

Further, the structured surfaces 228, 229 may be deformable so as to more efficiently absorb some of the energy in case of a severe deceleration, such as e.g. a collision. The exemplary embodiment shown in Fig. 6 also serves to show the structured surface 228 provided on a portion of the rail 211 may only cover a portion of the rail and not be provided along the full length of the rail.

Moreover, one can also only provide one structured surface, either only on the fastening rail 211 or only on the fastening bracket 223. Also, one may provide the bottom surface of the head of the screw 222 and the surface of the fastening bracket 223 which is pressing against the bottom surface of the head of the screw 222 when fastened to the rail, with a structured surface (not shown), either as an alternative or in combination with the above discussed features.

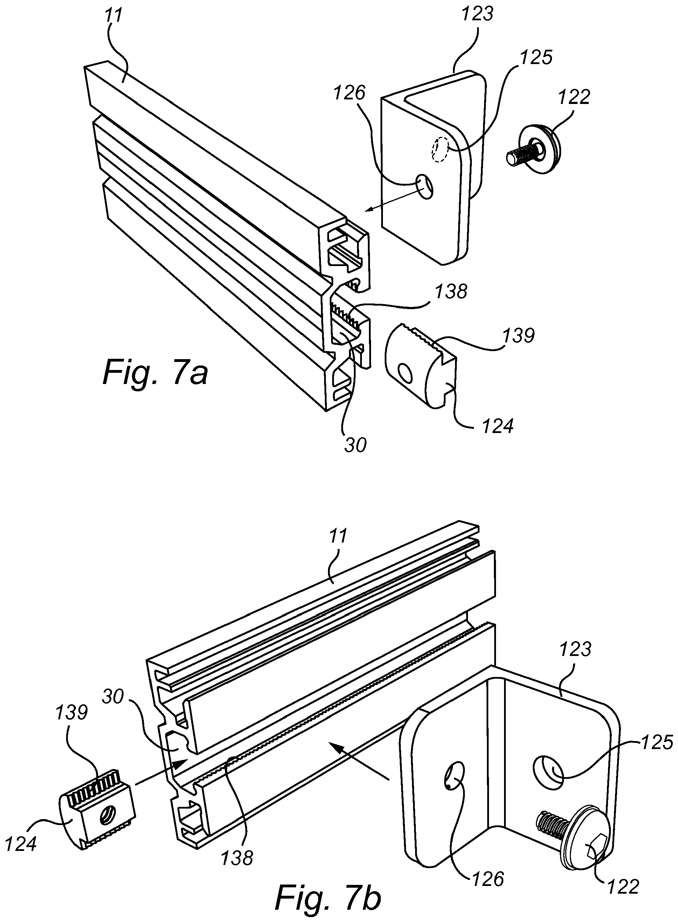

Fig. 7a shows an enlarged exploded view of the cut out 15 in Fig. 1 with a fastening bracket in accordance with another exemplary embodiment of the present invention. Fig. 7b shows the same exemplary embodiment as illustrated in Fig. 7a but from a different angle or perspective. Similarly to previously discussed exemplary embodiments, a portion 138 of the fastening rail 11 is provided with an altered (ribbed/rifled) surface. However, in this example, the securing element 124 is provided with the corresponding altered surface 139 instead of the item. As can be seen, a T-shaped nut 124 is provided with a ribbed surface 139 so to engage the ribbed portion 138 of the fastening rail 11. The two surfaces 138, 139 may be arranged in other ways other than being ribbed/rifled, they may be provided with protrusions/identations, chemically treated, mechanically treated, etc. Also here, one may control the frictional coefficient between the two surfaces/portions 138, 139 by altering the surface structure. This solution provides the possibility to use standard conventional items, such as e.g. conventional fastening brackets 123, hooks 173, lashing eyelets 143, cable holders, etc. Moreover, with the same reasoning as for the surfaces 128, 129 in Figures 2-5, regarding the contribution to the total frictional force, one can assume that the frictional coefficent between surfaces 138, 139 is much higher than the frictional coefficient between the surfaces of the item (bracket) 123 and the fastening rail 11 which are in contact. Hence, the frictional coefficient for the system may be approximated by only considering the frictional coefficient between the configured (ribbed, roughened, dented, etc.) surfaces 138, 139.

As in previous exemplary embodiments, the fastening bracket 123 comprises means 125 for fastening the bracket to a modular unit, e.g. a cupboard 200 or a toolbox 300 with for example a screw or bolt (not shown). The fastening bracket 123 is then secured to the fastening rail 11 by a securing element in the form of a threaded bolt 122. The bolt 122 engages the fastening bracket 123 by pressing the fastening bracket between the head of the bolt 122 and the fastening rail 11. The opposite part of the bolt 122 (threaded part) goes through opening 126 and engages a securing element, here in the shape of a T-shaped nut 124 with an altered surface 139, the T-shaped nut 124 being inserted via the undercut groove 30. The nut 124 is then consequently pressed against the altered portion/surface 138 of the fastening rail 11.

Fig. 8a illustrates another exemplary embodiment of an item 323 fastened to an elongated rail 311 in accordance with another embodiment of the present invention, while Fig. 8b shows an exploded view of the exemplary embodiment shown in Fig. 8a. Similarly to some of the other previously described embodiments an item 323 is fastened to a portion of a fastening rail 311, where the fastening rail 311 has an undercut groove 30. The item 323, here an angled fastening bracket 323, is fastened to rail 311 by a securing element in the form of a threaded bolt 322. The bolt 322 engages the fastening bracket 323 by pressing the fastening bracket 323 between the head of the bolt 322 and the fastening rail 311. The opposite part of the bolt goes through an opening 326 and engages a securing element 324, which works as a nut and which is inserted in the undercut groove 30 of the fastening rail 311. The fastening bracket 323 further comprises openings 325 through which a couple of second securing elements 325 may be inserted in order to fasten a second item, here in the form of an extension plate 333, to the first item 323, depending on the desired application and particular needs. Further, a modular unit may then be fastened to the plate 333 with a pair of securing elements, e.g. screws, via openings 335 on the extension plate. Alternatively and similarly to previously described embodiments, a modular unit (not shown) may be fastened directly to the fastening bracket 323 via openings 325. Further, even if the exemplary embodiment illustrated in Figs. 8a-b shows two elongated openings 325, 335 in the bracket 323 and plate 333, it may be provided with any number of openings having any shape or form, and accordingly any number of securing elements 342, depending on intended application and particular reuqirements. The securing elements 322, 342 may be of the same type or different types.

Further a coordinate system 370 referenced to the fastening rail 311 is illustrated, where the width of fastening rail is represented as direction w, the length direction is represented by direction / and depth direction is represented by direction d in the coordinate system 370.

The fastening bracket 323 in this exemplary embodiment provides a first means (here in the form of an opening 326) for fastening the bracket 323 to the fastening rail 311 and a second means (here in the form of two openings 325) for fastening an extension plate (sliding plate) to the bracket 323 where the second means are located at a position which is displaced relative the first in a direction parallel to the width (w) of the fastening rail 311. In the example when the fastening rail is arranged on an inner wall surface of the back space of a vehicle, the modular unit is secured to the fastening bracket at a point in space located above or below the central axis of the undercut groove 30. This results in that when a pulling or pushing force is exerted on the bracket 323 as indicated by arrow 351, e.g. during a severe decelaration/acceleration, it will result in a rotational force at the first means as indicated by arrow 352.

The bracket 323 is further provided with a flange 361 which (when the bracket 323 is fastened to the rail 311) is arranged between the two surfaces or portions 328 of the fastening rail 311, this flange 361 provides means for increasing the frictional force between the bracket 323 and the fastening rail 311 in case of a severe deceleration/acceleration. The flange 361 at least partially extends into an undercut groove 30 of the fastening rail 311. The rotation of the bracket 323 will cause the flange 361 to be pressed against a portion/surface 328 of the fastening rail 311 which will efficiently brake the sliding motion of the item 323 along the fastening rail 311 during a severe acceleration/deceleration, thus the rail 311 will absorb some of the energy or force resulting from such an event, in accordance with the inventive concept.

A second flange may be provided (not shown) on the opposite side of the bracket 323 relative the first flange 361, in order to further increase the frictional force. Accordingly with two flanges located on opposite side of the bracket 323, and both at least partially extending into an undercut groove 30 of the rail 311, both will be pressed against opposite surfaces/portions 328 of the fastening rail 311 when a rotational force 352 is present.

The exemplary embodiment as illustrated in Figs. 8a-b is readily combinable with any of the other herein described embodiments of the present invention, as will be understood by one skilled in the art.

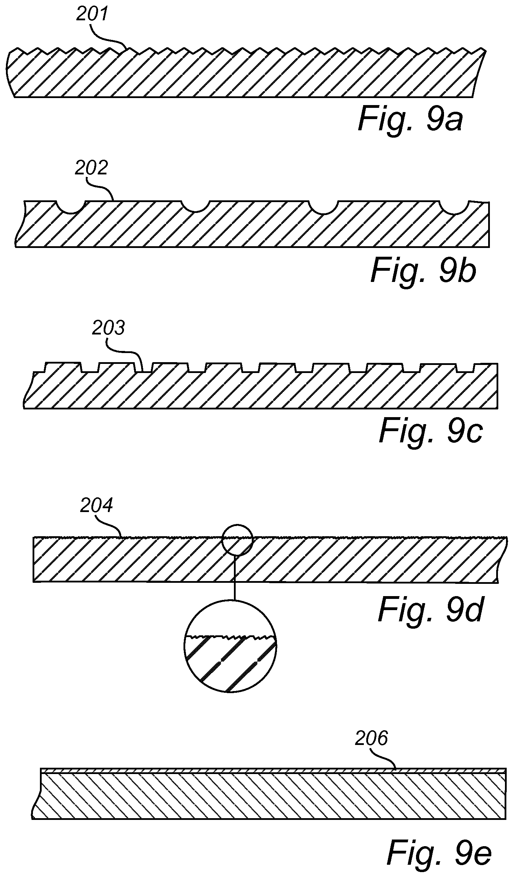

Fig. 9a-d illustrates different examples of altered portions or surfaces so to control the frictional coefficient between two surfaces. These surface structures 201, 202, 203, 204 may be arranged on at least one portion of a fastening rail 11, and a corresponding surface (not shown) may be arranged on at least one portion of an item 123, 143, 173, 223 and/or at least one portion of a securing element 122, 124. Fig. 9a shows a ribbed surface structure 201 according to one exemplary embodiment. Fig. 9b shows a surface structure with identations 202 in accordance with another exemplary embodiment. Fig. 9c shows a surface structure with squared identations 203 in accordance with one exemplary embodiment of the invention. Fig. 9d shows a roughened surface structure 204, in accordance with another exemplary embodiment of the invention. The roughened surface 204 may be provided by mechanical means or chemical means as known in the art. Lastly, Fig. 9e shows another exemplary embodiment of the invention by providing a coating layer 206 on a surface, such as e.g. a rubber coating. The surface coating 206 as mentioned may be provided on at least one portion of a rail 11, 211, at least one portion of an item 123, 143, 173, 223 and/or at least one portion of a securing element 122, 124.

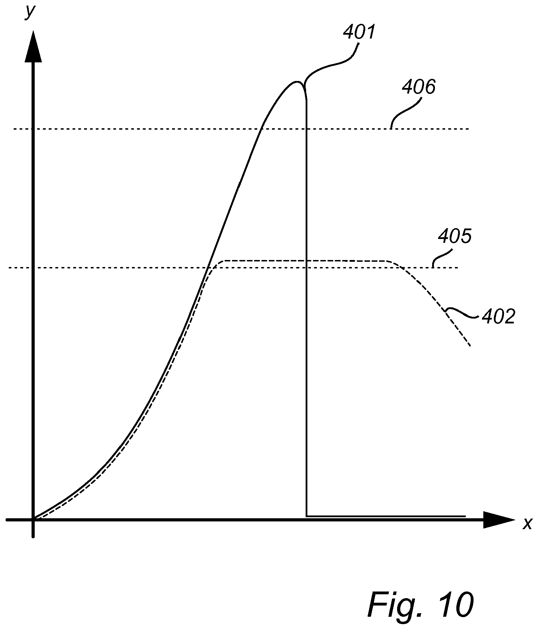

Fig. 10 shows two curves in a graph which illustrate the differences between a conventional fastening system and a system in accordance with an embodiment of the invention. The y-axis is selected to respresent the magnitude of force measured at the attaching elements (securing element(s), item(s)), and the x-axis is used to measure the relative displacement of the item. The two horizontal lines 405, 406 represent the loading threshold value and the ultimate strength value respectively, where the ultimate strength is the magnitude of force that the attaching elements (e.g. bolts, brackets, screws, hooks, etc.) can withstand before breaking. As can be concluded from studying curve 401, which represents a conventional system which allows for no movement along a rail, i.e. a standard rigid mounting/fastening, the force at the attaching elements reaches levels above the ultimate threshold 406 and one or several of them eventually break off. From curve 402, which represents the inventive system, one can see that once the loading force reaches the predefined threshold value 405, the item is allowed to move along the rail, thus limiting the force exerted on the attaching elements to reasonable and tolerable value and no breaking of the securing element(s) and/or item(s) occurs.

Even though almost all references are made to surface structures which would result in an increased frictional coefficient the invention is however readily applicable for surfaces which are to be treated so to reduce friction, e.g. by polishing, lubrication, etc. The type of surface is dependent on the intended application and surrounding circumstances. The frictional coefficient is chosen to be a value which is appropriate from a safety standpoint for the chosen fastening system, be it lower or higher than stock/original value.

The invention has mainly been described above with reference to a few embodiments. However, as is readily appreciated by a person skilled in the art, other embodiments than the ones disclosed above are equally possible within the scope of the invention, as defined by the appended claims.

**Claims**

1. A method for fastening an item (123, 143, 173, 223, 323) in a fastening system (10) adapted for a cargo or a back space (2) of a vehicle (1), the system comprising at least one elongated fastening rail (11, 211, 311) attached to an inner surface of said cargo or back space, said method comprising comprising; fastening said item to said rail by

   pressing said item against at least one portion (128, 228, 328) of said fastening rail with at least one securing element (122, 222, 322) so that the item moves along and in contact with said fastening rail when subjected to a loading force of a magnitude above a predefined loading threshold value and so that said item does not move when subjected to a loading force of a magnitude below or equal to the predefined loading threshold value,
   wherein said at least one portion (128, 228, 328) comprises a surface structure (201, 202, 203, 204) so as to control a frictional coefficient between said at least one portion (128, 228, 328) of said fastening rail and said item.

2. The method according to claim 1, wherein said step of pressing said item against at least one portion of said fastening rail with a securing element comprises pressing said item against at least one portion of said fastening rail with a securing element with a pressing force of a predefined magnitude.

3. The method according to claim 1 or 2, wherein said loading force is substantially parallel with a longitudinal axis of said fastening rail.

4. The method according to any one of the preceding claims, wherein said predefined loading threshold value is below the ultimate strength of the securing element.

5. The method according to any one of claims 1-3, wherein said securing element is a first securing element (122, 222, 322), wherein said predefined loading threshold value is below the ultimate strength of a second securing element (142, 342) that is pressing the item against at least one portion of a modular unit (200, 300).

6. A fastening system (10) adapted to be attached to an inner surface of a cargo or a back space (2) of a vehicle (1), said fastening system comprising:

   at least one elongated fastening rail (11, 211, 311) for fastening an item (123, 143, 173, 223, 323), the fastening rail being adapted to be attached to said inner surface;
   at least one securing element (122, 222, 322) arranged to press said item against at least one portion (128, 228, 328) of said fastening rail, **characterized in that** said item, while being pressed by said securing element, is arranged to move along and in contact with said fastening rail when subjected to a loading force of a magnitude above a predefined loading threshold value and **in that** said item is further arranged to not move when subjected to a loading force of a magnitude below or equal to a predefined loading threshold value;
   wherein said at least one portion (128, 228, 328) comprises a surface structure (201, 202, 203, 204) so as to control a frictional coefficient between said at least one portion (128, 228, 328) of said fastening rail and said item.

7. The system according to claim 6, wherein said at least one portion of said fastening rail comprises a surface structure so as to control a frictional coefficient between said at least one portion of said fastening rail and said securing element.

8. The system according to claim 6 or 7, wherein said surface structure is a ribbed surface structure.

9. The system according to anyone of claims 6-8, wherein said surface structure is a deformable surface structure.

10. The system according to claim 6 or 7, wherein said frictional coefficient is based on said predefined loading threshold value and a pressing force that said securing element is pressing said item against said at least one portion of said fastening rail with.

11. The system according to anyone of claims 6-10, wherein said fastening rail comprises at least one undercut groove (30).

12. The system according to claim 11, wherein said at least one securing element comprises a nut (124) and a bolt (122), said bolt comprising a threaded portion and a head, wherein the bolt is to engage the item by pressing the item between at least one portion of said fastening rail and the head of the bolt, wherein the threaded portion engages the nut, said nut being positioned in the undercut groove.

13. The system according to any one of claims 6-12, wherein said item is a fastening bracket for connecting a modular unit (200, 300), such as a cupboard, tool holder, storage box or shelf, to said rail, wherein the fastening bracket comprises a first portion to be secured to the modular unit and a second portion to be secured to said rail.

14. A vehicle (1), such as a service vehicle, equipped with a fastening system according to any one of claims 6-13.

**Patentansprüche**

1. Verfahren zum Befestigen eines Gegenstands (123, 143, 173, 223, 323) in einem Befestigungssystem (10), das für einen Ladungs- oder einen Hinterraum (2) eines Fahrzeugs (1) ausgelegt ist, wobei das System mindestens eine längliche Befestigungsschiene (11, 211, 311) umfasst, die an einer Innenfläche des Ladungs- oder des Hinterraums befestigt ist, das Verfahren umfassend:

Befestigen des Gegenstands an der Schiene durch Drücken des Gegenstands gegen mindestens einen Abschnitt (128, 228, 328) der Befestigungsschiene mit mindestens einem Sicherungselement (122, 222, 322), so dass sich der Gegenstand entlang der Befestigungsschiene bewegt und in Kontakt mit dieser steht, wenn er einer Belastungskraft einer Größe über einem vorbestimmten Belastungsschwellenwert ausgesetzt ist, und dass sich der Gegenstand nicht bewegt, wenn er einer Belastungskraft einer Größe unter oder gleich dem vorbestimmten Belastungsschwellenwert ausgesetzt ist, wobei der mindestens eine Abschnitt (128, 228, 328) eine Oberflächenstruktur (201, 202, 203, 204) umfasst, um einen Reibungskoeffizienten zwischen dem mindestens einen Abschnitt (128, 228, 328) der Befestigungsschiene und dem Gegenstand zu steuern.

2. Verfahren nach Anspruch 1, wobei der Schritt des Drückens des Gegenstands gegen mindestens einen Abschnitt der Befestigungsschiene mit einem Sicherungselement das Drücken des Gegenstands gegen mindestens einen Abschnitt der Befestigungsschiene mit einem Sicherungselement mit einer Presskraft einer vorbestimmten Größe umfasst.

3. Verfahren nach Anspruch 1 oder 2, wobei die Belastungskraft im Wesentlichen parallel zu einer Längsachse der Befestigungsschiene ist.

4. Verfahren nach einem der vorhergehenden Ansprüche, wobei der vordefinierte Belastungsschwellenwert unterhalb der Bruchfestigkeit des Sicherungselements liegt.

5. Verfahren nach einem der Ansprüche 1-3, wobei das Sicherungselement ein erstes Sicherungselement (122, 222, 322) ist, wobei der vorbestimmte Belastungsschwellenwert unter der Bruchfestigkeit eines zweiten Sicherungselements (142, 342) liegt, das das Element gegen mindestens einen Abschnitt einer Moduleinheit (200, 300) drückt.

6. Befestigungssystem (10), das an einer Innenfläche eines Ladungsoder eines Hinterraums (2) eines Fahrzeugs (1) befestigt werden kann, das Befestigungssystem umfassend:

mindestens eine längliche Befestigungsschiene (11, 211, 311) zum Befestigen eines Gegenstandes (123, 143, 173, 223, 323), wobei die Befestigungsschiene zum Befestigen an der Innenfläche geeignet ist; mindestens ein Sicherungselement (122, 222, 322), das angeordnet ist, um das Element gegen mindestens einen Abschnitt (128, 228, 328) der Befestigungsschiene zu drücken, **dadurch gekennzeichnet, dass** das Element, während es durch das Sicherungselement gedrückt wird, angeordnet ist, um sich entlang und in Kontakt mit der Befestigungsschiene zu bewegen, wenn es einer Belastungskraft einer Größe über einem vorbestimmten Belastungsschwellenwert ausgesetzt ist, und dass das Element ferner angeordnet ist, um sich nicht zu bewegen, wenn es einer Belastungskraft einer Größe unter oder gleich einem vorbestimmten Belastungsschwellenwert ausgesetzt ist; wobei der mindestens eine Abschnitt (128, 228, 328) eine Oberflächenstruktur (201, 202, 203, 204) umfasst, um einen Reibungskoeffizienten zwischen dem mindestens einen Abschnitt (128, 228, 328) der Befestigungsschiene und dem Gegenstand zu steuern.

7. System nach Anspruch 6, wobei der mindestens eine Abschnitt der Befestigungsschiene eine Oberflächenstruktur umfasst, um einen Reibungskoeffizienten zwischen dem mindestens einen Abschnitt der Befestigungsschiene und dem Sicherungselement zu steuern.

8. System nach Anspruch 6 oder 7, wobei die Oberflächenstruktur eine gerippte Oberflächenstruktur ist.

9. System nach einem der Ansprüche 6-8, wobei die Oberflächenstruktur eine verformbare Oberflächenstruktur ist.

**10.** System nach Anspruch 6 oder 7, wobei der Reibungskoeffizient auf dem vorbestimmten Belastungsschwellenwert und einer Presskraft basiert, mit der das Sicherungselement den Gegenstand gegen den mindestens einen Abschnitt der Befestigungsschiene drückt.

**11.** System nach einem der Ansprüche 6-10, wobei die Befestigungsschiene mindestens eine hinterschnittene Nut (30) umfasst.

**12.** System nach Anspruch 11, wobei das mindestens eine Sicherungselement eine Mutter (124) und eine Schraube (122) umfasst, wobei die Schraube einen Gewindeabschnitt und einen Kopf umfasst, wobei die Schraube in den Gegenstand eingreifen soll, indem sie den Gegenstand zwischen mindestens einem Abschnitt der Befestigungsschiene und dem Kopf der Schraube drückt, wobei der Gewindeabschnitt in die Mutter eingreift und die Mutter in der hinterschnittenen Nut positioniert ist.

**13.** System nach einem der Ansprüche 6-12, wobei der Gegenstand eine Befestigungshalterung zum Verbinden einer modularen Einheit (200, 300), wie etwa eines Schranks, eines Werkzeughalters, einer Aufbewahrungsbox oder eines Regals, mit der Schiene ist, wobei die Befestigungshalterung einen ersten Abschnitt zum Sichern an der modularen Einheit und einen zweiten Abschnitt zum Sichern an der Schiene umfasst.

**14.** Fahrzeug (1), wie etwa ein Dienstfahrzeug, ausgestattet mit einem Befestigungssystem nach einem der Ansprüche 6-13.

**Revendications**

**1.** Procédé pour fixer un élément (123, 143, 173, 223, 323) dans un système de fixation (10) adapté pour un espace de chargement ou arrière (2) d'un véhicule (1), le système comprenant au moins un rail de fixation allongé (11, 211, 311) fixé à une surface intérieure dudit espace de chargement ou arrière, ledit procédé comprenant
la fixation dudit élément audit rail en pressant ledit élément contre au moins une partie (128, 228, 328) dudit rail de fixation avec au moins un élément d'immobilisation (122, 222, 322) de sorte que l'élément se déplace le long dudit rail de fixation et en contact avec celui-ci lorsque soumis à une force de mise sous contrainte d'une intensité supérieure à une valeur de seuil de mise sous contrainte prédéfinie et de sorte que ledit élément ne se déplace pas lorsque soumis à une force de mise sous contrainte d'une intensité inférieure ou égale à la valeur de seuil de mise sous contrainte prédéfinie,

dans lequel ladite au moins une partie (128, 228, 328) comprend une structure de surface (201, 202, 203, 204) de manière à contrôler un coefficient de friction entre ladite au moins une partie (128, 228, 328) dudit rail de fixation et ledit élément.

**2.** Procédé selon la revendication 1, dans lequel ladite étape de pressage dudit élément contre au moins une partie dudit rail de fixation avec un élément d'immobilisation comprend le pressage dudit élément contre au moins une partie dudit rail de fixation avec un élément d'immobilisation avec une force de pressage d'une intensité prédéfinie.

**3.** Procédé selon la revendication 1 ou 2, dans lequel ladite force de mise sous contrainte est sensiblement parallèle à un axe longitudinal dudit rail de fixation.

**4.** Procédé selon l'une quelconque des revendications précédentes, dans lequel ladite valeur de seuil de mise sous contrainte prédéfinie est inférieure à la résistance ultime de l'élément d'immobilisation.

**5.** Procédé selon l'une quelconque des revendications 1-3, dans lequel ledit élément d'immobilisation est un premier élément d'immobilisation (122, 222, 322), dans lequel ladite valeur de seuil de mise sous contrainte prédéfinie est inférieure à la résistance ultime d'un deuxième élément d'immobilisation (142, 342) qui presse l'élément contre au moins une partie d'une unité modulaire (200, 300).

**6.** Système de fixation (10) adapté pour être fixé à une surface intérieure d'un espace de chargement ou arrière (2) d'un véhicule (1), ledit système de fixation comprenant :

au moins un rail de fixation allongé (11, 211, 311) pour fixer un élément (123, 143, 173, 223, 323), le rail de fixation étant adapté pour être fixé à ladite surface intérieure ;
au moins un élément d'immobilisation (122, 222, 322) étudié pour presser ledit élément contre au moins une partie (128, 228, 328) dudit rail de fixation, **caractérisé en ce que** ledit élément, alors qu'il est pressé par ledit élément d'immobilisation, est étudié pour se déplacer le long dudit rail de fixation, et en contact avec celui-ci, lorsque soumis à une force de mise sous contrainte d'une intensité supérieure à une valeur de seuil de mise sous contrainte prédéfinie, et **en ce que** ledit élément est en outre étudié pour ne pas se déplacer lorsque soumis à une force de mise sous contrainte d'un intensité inférieure ou égale à une valeur de seuil de mise sous contrainte prédéfinie ;
dans lequel ladite au moins une partie (128, 228, 328) comprend une structure de surface (201, 202, 203, 204) de manière à contrôler un coefficient de friction entre ladite au moins une partie (128, 228, 328) dudit rail de fixation et ledit élément.

7. Système selon la revendication 6, dans lequel ladite au moins une partie dudit rail de fixation comprend une structure de surface de manière à contrôler un coefficient de friction entre ladite au moins une partie dudit rail de fixation et ledit élément d'immobilisation.

8. Système selon la revendication 6 ou 7, dans lequel ladite structure de surface est une structure de surface nervurée.

9. Système selon l'une quelconque des revendications 6-8, dans lequel ladite structure de surface est une structure de surface déformable.

10. Système selon la revendication 6 ou 7, dans lequel ledit coefficient de friction est basé sur ladite valeur de seuil de mise sous contrainte prédéfinie et une force de pressage avec laquelle ledit élément d'immobilisation presse ledit élément contre ladite au moins une partie dudit rail de fixation.

11. Système selon l'une quelconque des revendications 6-10, dans lequel ledit rail de fixation comprend au moins une rainure en contre-dépouille (30).

12. Système selon la revendication 11, dans lequel ledit au moins un élément d'immobilisation comprend un écrou (124) et une vis (122), ladite vis comprenant une partie filetée et une tête, dans lequel la vis doit se mettre en prise avec l'élément en pressant l'élément entre au moins une partie dudit rail de fixation et la tête de la vis, dans lequel la partie filetée se met en prise avec l'écrou, ledit écrou étant positionné dans la rainure en contre-dépouille.

13. Système selon l'une quelconque des revendications 6-12, dans lequel ledit élément est une équerre de fixation pour relier une unité modulaire (200, 300), telle une armoire, un porte-outil, une boîte de rangement ou une étagère, audit rail, dans lequel l'équerre de fixation comprend une première partie à fixer à l'unité modulaire et une deuxième partie à fixer audit rail.

14. Véhicule (1), tel un véhicule de service, équipé d'un système de fixation selon l'une quelconque des revendications 6-13.

*Fig. 1*

*Fig. 2*

*Fig. 3*

**Fig. 4**

**Fig. 5**

211  223  225  222  228  226  229

*Fig. 6*

Fig. 7a

Fig. 7b

Fig. 8a

Fig. 8b

201

Fig. 9a

202

Fig. 9b

203

Fig. 9c

204

Fig. 9d

206

Fig. 9e

*Fig. 10*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20100260541 A

- EP 14198183